# EUROPEAN PATENT APPLICATION

(11) **EP 2 838 274 A1**
(43) Date of publication of application: **18.02.2015**
(21) Application number: 13180415.5
(22) Date of filing: 14.08.2013
(51) Int. Cl.: H04N 21/81, H04N 21/41, H04N 21/45, H04N 21/478, H04N 21/658

(54) **Device and method for providing an application list**

(71) Applicant: TP Vision Holding B.V., 1097 JB Amsterdam (NL)
(72) Inventor: Shanmugasundaram, Hemakumar Kasala, 1097 JB Amsterdam (NL)
(74) Representative: Busch, Patrick

(57) **Abstract**

The invention relates to a method for providing a list of references to applications, the method comprising
- obtaining information about a platform type of a user device (22, 41);
- obtaining information on available services and/or channels from a television (23, 43);
- finding references to applications for said platform type, each of the applications being associated with at least one of said services and/or channels; and
- providing a list of said references to applications (24, 44).

The invention also relates to a television (10) and a user device (110) configured to implement the method for providing a list.

## Description

### Field of the invention

The invention relates to a device and method for providing an application list. The invention further relates to a television and a user device for providing an application list.

### Background of the invention

Many Smart TVs are able to run applications, so-called "apps". In addition to a TV, many consumers also have a smart phone and/or tablet on which they run apps. The amount of available apps is very large for certain platforms, e.g. Apple iOS or Google Android.

It is difficult for a consumer to know which applications, or even which application provider, may be interesting for the consumer. Therefore, there is a need for a solution to easily provide a consumer with potentially relevant applications.

### Summary of the invention

The invention provides a method of recommending apps that involves determining which service provider has been selected and/or which channels have been installed during the TV installation process and using this information to recommend certain of the available apps. For example, a Sky TV App may be recommended when the user has inserted a Sky Deutschland CI+ module and smartcard. As another example, a Pro7 App may be recommended when the user has installed the Pro7 channel.

In the context of present (digital) televisions, as in the present disclosure, the terms "channel" and "service" are both used to indicate a broadcast channel that the user can tune to. When a television is so configured that channels or services which are available for display on the television, these channels or services can be said to be installed on the television.

Applications may be provided by hardware (consumer electronics, CE) manufacturers, e.g.. for a specific television model or product range. Other applications can be provided by channel broadcasters and program makers. Applications may also be provided by cable, satellite, or terrestrial broadcasting operators and distributors. Applications can relate to broadcast or on-demand content, to publicly available or free-to-air content and to conditional availability "PayTV" content.

In an embodiment, the TV determines the platform of the smart phone or tablet that is connected to it, searches a list/database of available apps on this platform for apps that have a relation to the selected service provider and/or available/installed channels and sends App recommendations to the smart phone or tablet.

In another embodiment, the TV sends data on the selected service provider and/or available channels to a smart phone or tablet that is connected to it. This smart phone or tablet then searches a list/database of available apps for apps that have a relation to this selected service provider and/or these available channels and displays App recommendations on its display.

Therefore, the invention provides a method for providing a list of references to applications, the method comprising
- obtaining information about a platform type of a user device;
- obtaining information on available services and/or channels from a television;
- finding references to applications for said platform type, each of the applications being associated with at least one of said services and/or channels; and
- providing a list of said references to applications.

In an embodiment according the invention, the method also comprises displaying the list of references to applications on the user device. This allows the user to make a selection of which of the recommended applications is to be installed. The provided list can be shown in a logical order, for example in the order of the corresponding television channel numbering.

In an embodiment according the invention, the method comprises receiving a selection of listed references to applications from a user and installing the selected applications. Advantageously, the installation process can be a "batch" installation - the user selects the applications to be installed, after which each application is installed without further user intervention. This is more efficient then installing applications one by one.

In an embodiment according the invention, the method comprises determining a channel or service that the television is tuned to, determining an application corresponding to the channel or service, and, if the application is installed on the user device, launching or switching to the application on the user device. This advantageously allows a relevant application to be run on the user device with no or minimal required user input (for example, only an allow/deny action).

In an embodiment according the invention, relevant information on available services or the service provider is be retrieved via the CAM, for example via a Specific Application Support, SAS, resource or via SI (Service Information), such as information from a homing channel.

In an embodiment according the invention, relevant information on channels from broadcasters is retrieved via an Application Identification Table (AIT) or equivalent from each of the available channels respectively. For example, the AIT (or similar data) can be enhanced to signal companion apps. Alternatively, information on channels from broadcasters may be retrieved by retrieving the names of channels that were assigned during the television installation process. In an embodiment according the invention, information on the CE manufacturer (of the television or associated hardware) can be retrieved via a SmartTV portal or website.

The invention further provides a television comprising:
- communication means for communicating with a user device; and
- a processing unit configured to
   - obtain information about a platform type of the user device
   - obtain information on services and/or channels available on the television;
   - find references to applications for said platform type, each of the applications being associated with at least one of said services and/or channels; and
   - providing a list of said references to applications.

As such, the television implements the method as described above.

In an embodiment according the invention, the television is further configured to send the list of references to applications to the user device.

In an embodiment according the invention, the television further comprises a network interface for connecting to a server via a network, wherein the processing unit is configured to find references to applications by sending a request comprising the information about a platform type and information relating to services and/or channels to the server and by receiving a response comprising said references from the server.

The invention further provides a user device comprising:
- communication means for communicating with a television;
- a processing unit, configured to:
   - obtain information on available services and/or channels from the television;
   - find references to applications for a platform type of the user device, each of the applications being associated with at least one of said services and/or channels and providing a list of said references to applications.

In an embodiment according the invention, the user device is further configured to: display the list of references to applications on a display of the user device.

In an embodiment according the invention, the user device is configured to receive a selection of applications from the list of applications and to install the selected applications.

In an embodiment according the invention, the user device is configured to install the selected applications in a batch process. That is, the selected applications are installed without further user interventions.

The invention also provides a television configured to cooperate with a user device as described above.

### Brief description of the Figures

On the attached drawing sheets,
- figure 1 schematically shows a television with connected user device, according to an embodiment of the invention;
- figure 2 schematically shows a method for providing a list of applications, according to an embodiment of the invention;
- figure 3 schematically shows a method for determining applications, according to an embodiment of the invention;
- figure 4 schematically shows a further method for providing a list of applications, according to an embodiment of the invention;
- figure 5 schematically shows an operation of a server for providing a list of applications, according to an embodiment of the invention;
- figure 6 schematically shows an application running on a user device according to an embodiment of the invention.
- figure 7 schematically shows a method for launching an application, according to an embodiment of the invention; and
- figure 8 schematically shows an alternative method for launching an application, according to an embodiment of the invention.

### Detailed description

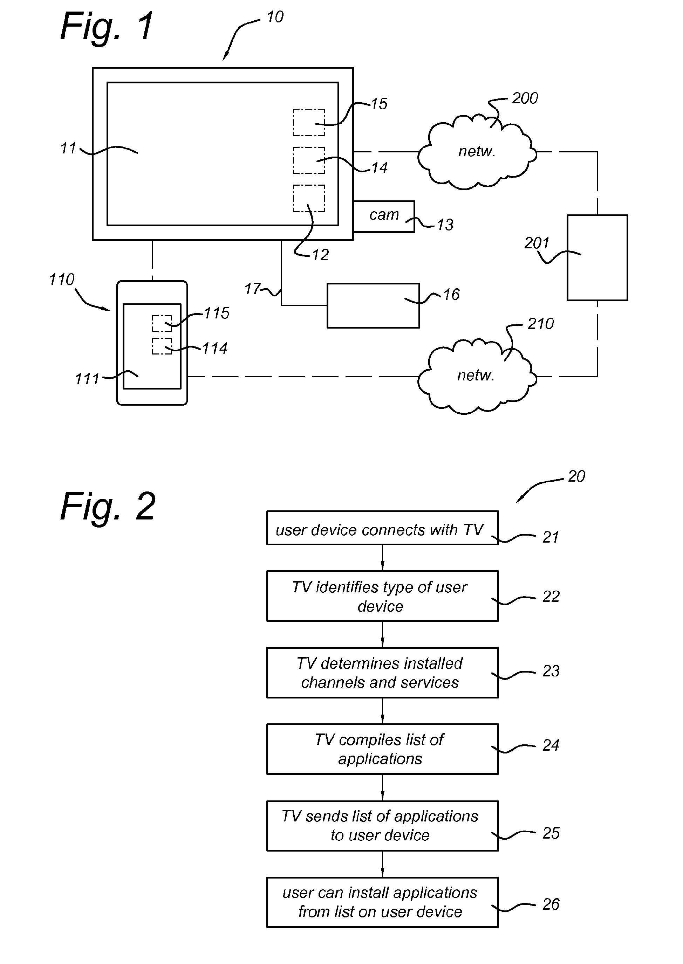

Figure 1 schematically shows a television 10 with connected user device 110, according to an embodiment of the invention. The television 10 comprises a display 11, an interface unit 12, for example a Common Interface (CI) or Common Interface Plus unit for connecting with an Conditional Access Module (CAM) 13. The CAM 13 will typically be provided by a (cable or satellite television) operator, usually in the form of a CI-compatible module that receives a smart card with subscriber details.

The television 10 further comprises a processing unit 14 and a network interface 15. The processing unit is configured to execute software, for example firmware as provided by the TV manufacturer or application software provided on the CAM. The network interface 15 can connect with an external network 200, such as the internet. The interface 15 can for example be a Ethernet or WiFi interface. It may also comprise short range connection interfaces, such as Bluetooth or infrared. A peripheral apparatus 16, in the present example a (surround) sound system 16 is connected to the television via connection 17. The connection 17 can be a standardized digital connection, for example a HDMI connection. It can also be a wireless connection.

The user device 110 comprises a display 111, a processing unit 114, and a network interface 115 for connecting with a network 210. This network may be the same as network 200 that the television 10 connects with, e.g. the internet. The user device 110 can be portable computing device, such as a laptop computer, a tablet computer, or a mobile phone. The user device is able to run third party applications on its processing unit 114. Such third party applications may for example be provided from a central application store accessible via network 210.

The user device 110 can connect with television 10. This connection need not be permanent. The connection can be through any mutually supported short range standard such as Bluetooth or infrared communications. It can be via a local (WiFi) network, such as a local packet-switched wired or wireless network (LAN or WLAN).

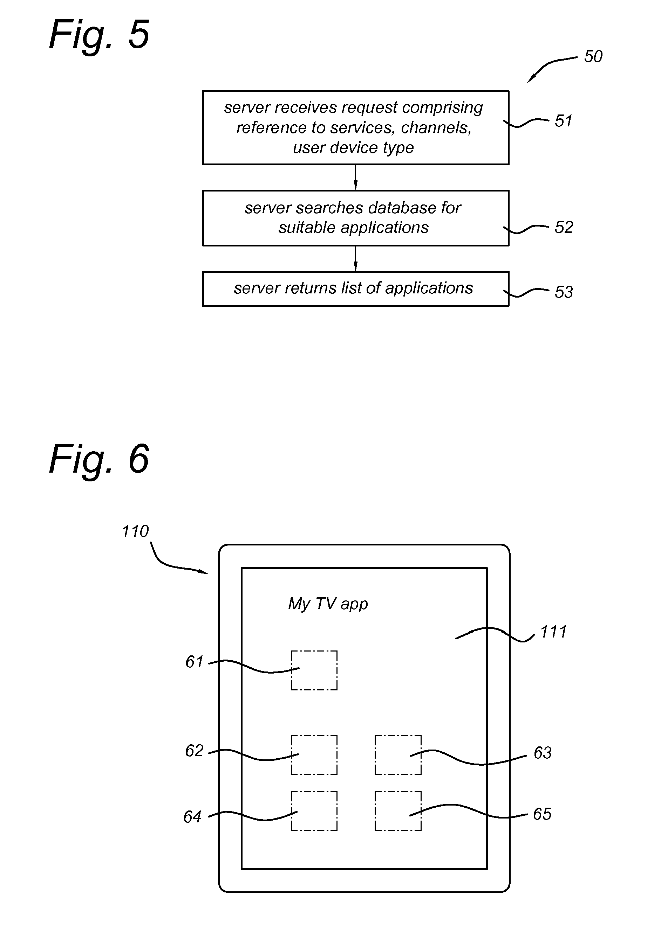

Figure 1 also shows an optional server 201 connected to network 200. Server 201 may also or alternatively be accessible through network 210. The server can communicate with TV 10 and/or user device 110, for example through a standardized protocol such as HTTP. The server comprises the usual components: a persistent storage unit, working memory, a processing unit, and a network interface (not shown in figure 1). The functionality of the optional server 201 will be further described in reference to figure 5.

Figure 2 schematically shows a method 20 for providing a list of applications, according to an embodiment of the invention. In action 21, user device 110 connects with the television 10. The television 10 obtains information about the type or platform type of user device 110 in action 22. Examples of platform types are e.g. Android-based mobile phone or tablet, iOS-based mobile phone or tablet, or windows based (portable) computing device. The type information can also include a major and minor version number or another suitable release version identifier. The information should be enough to be able to determine if a (third party) application can run on the connected user device 110.

In an embodiment according the invention, the user device 110 is provided with an application, for example provided by the television 10 manufacturer, which provides the following functionalities: 1) connecting with television 10 and 2) sending suitable information concerning the user device 110 type to the television 10.

Action 23 is executed by the television 10. The television makes an inventory of which channels are configured. The television may also determine which (cable, satellite, wireless, etc) operator provides programs and/or services. The television may determine which CAM is connected, and which operator provides the CAM. In general, the television tries to determine the identities (for example a name or a descriptor string of an operator, a broadcaster identifier, etc) of all relevant content providers that the user may receive content from.

In addition, the television may determine the identity of hardware providers of the television 10 itself (e.g. the television manufacturer) or providers of connected hardware (for example, the hardware provider of a connected sound system). The television may be configured to determine the identity of connected hardware through standardized interfaces such as HDMI. A suitable moment for making this inventory of potentially relevant content and hardware providers may be just after installation of the channels and services.

Relevant information on available services or the service provider could be retrieved via the CAM 13 (e.g. via a Specific Application Support, SAS, resource), via SI (Service Information), e.g. from a homing channel or equivalent. These services can include for example video-on demand (VoD) services and internet services, or applications such as EPG.

Relevant information on channels from broadcasters could be retrieved via an Application Identification Table (AIT) or equivalent from each of those available channels.

Relevant information on the CE manufacturer of the television can be built-in in the television. Relevant information on the manufacturer of the television or associated hardware could be retrieved via e.g. a SmartTV portal (website).

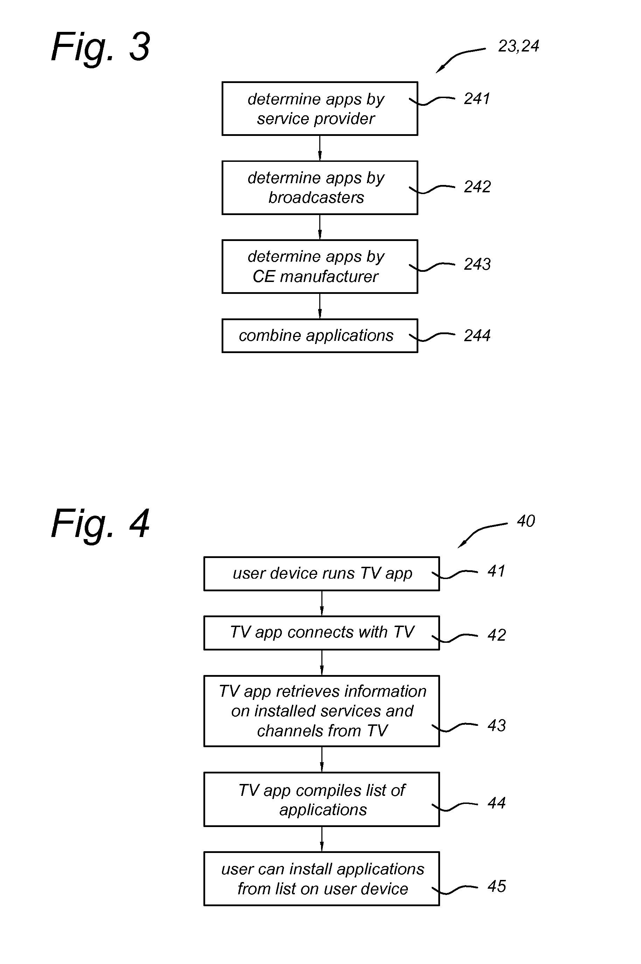

The obtained information on channels, services, providers, etc associated with the television is for example organized in a list. In so far that the obtained information does not already include a reference to an application, for each item on the list, in action 24 the television 10 tries to determine if a relevant application for the platform type of the user device 110 is available. If such an application is found, a reference to the application is included on an application list. More optional details concerning actions 23 and 24 are provided in reference to figure 3.

In action 25, the television 10 sends the compiled list (with all suitable applications that were found) to the user device 110. The list may be transmitted via the connection between the television 10 and the user device 110. After this step, the connection is in principle no longer necessary.

In an alternative embodiment, the list is simply displayed on the television. In that case, the user would be required to find and install the applications.

Therefore, in a preferred embodiment the list is used in the user device 110 so that the user can either automatically or manually install each or selected applications of the list. For example, in an embodiment the list of applications is presented to the user. Each application is identified by a title, possibly a graphic icon, and possibly a description stating the nature of the application and the provider. The user can then mark a checkbox to indicate that installation of the application is requested.

Figure 3 schematically shows actions for determining applications, according to an embodiment of the invention. These actions can be used in steps 23 and/or 24 of figure 2. These actions can also be applied in the equivalent actions of the methods of figures 4 and 5.

In action 241, the television 10 (or, as appropriate in the other embodiments, the user device 110, or server 201) determines applications by searching for applications associated with a service provider. For example, the service provider can be a provider of a CAM 13.

In action 242, the television 10 (or user device 110 or server 201) determines applications by searching for applications associated with broadcasters or broadcast channels. For example, a table listing channel names and corresponding applications may be consulted.

In action 243, the television 10 (or user device 110 or server 201) determines applications by searching for applications associated with hardware providers or manufacturers. The television for example searches for applications for the specific television model or for connected equipment.

In action 244, a combined list of the found applications is compiled.

Figure 4 schematically shows a further method 40 for providing a list of applications, according to an embodiment of the invention. In the method of figure 2, the television 10 took the central place. In the embodiment of figure 4, the user device 110 has the central place.

The user device 110 runs a specific "TV application" (action 41), possibly provided by the television manufacturer. In action 42 (similar to action 21), the TV application causes the user device 110 to connect with television 10. The TV application retrieves information from the television concerning available services and channels in action 43. The retrieved information can also comprise information (e.g. product identifiers) concerning the television 10 hardware and hardware 16 connected to the television.

In action 44, the TV application compiles a list of applications that may be relevant for the available services, channels, hardware, etc as discovered by action 43. The compilation of this list can be handled by the TV application using a local database of suitable applications. It can also be handled via an on-line search for suitable applications, for example through an automated search in relevant "application stores". It can also be handed via an external server 201 as will be described in reference to figure 5.

In action 45 (similar to action 26), the user is again presented with the list of found applications and has the option to install any or all of them.

Figure 5 schematically shows an operation 50 of a server 201 for providing a list of applications, according to an embodiment of the invention. The server could be provided by the TV manufacturer. If the TV manufacturer also provides the TV application that is run on the client device in the embodiments of e.g. figures 2 and 4, then the TV application can comprise a built-in reference to the server 201.

Server 201 has an automatically or manually maintained database of applications, indexed by for example a channel, service, or hardware identifier. The server can retrieve a request (action 51) comprising a reference to or identifier of a channel, service or hardware associated with a television 10. In step 52 the server searches the database for suitable applications (this may comprise again the steps of figure 3) and, in action 53, returns a list of applications.

The server 201 can automatically search application stores. It is also possible that the application database is manually maintained. A combination might be advantageous, wherein an automated search engine is used to add entries to the database, and human intervention is used to add missed applications and/or to remove irrelevant or potentially harmful (malware) applications.

Figure 6 schematically shows an application running on a user device 110 according to an embodiment of the invention. The display 111, which is also a touch input device, shows the title of the application, a setup button 61, and application icons 62, 63, 64, 65. The setup button starts a configuration module which implements e.g. the actions of figures 2-4. In an embodiment, the user can set further preferences, e.g. whether or not to include non-free applications in the list. Icons 62-65 can be used to launch respective applications (e.g. an application for channel 1, channel 2, etc). These applications have been discovered and subsequently installed during the setup procedure as described in reference to figures 2-5.

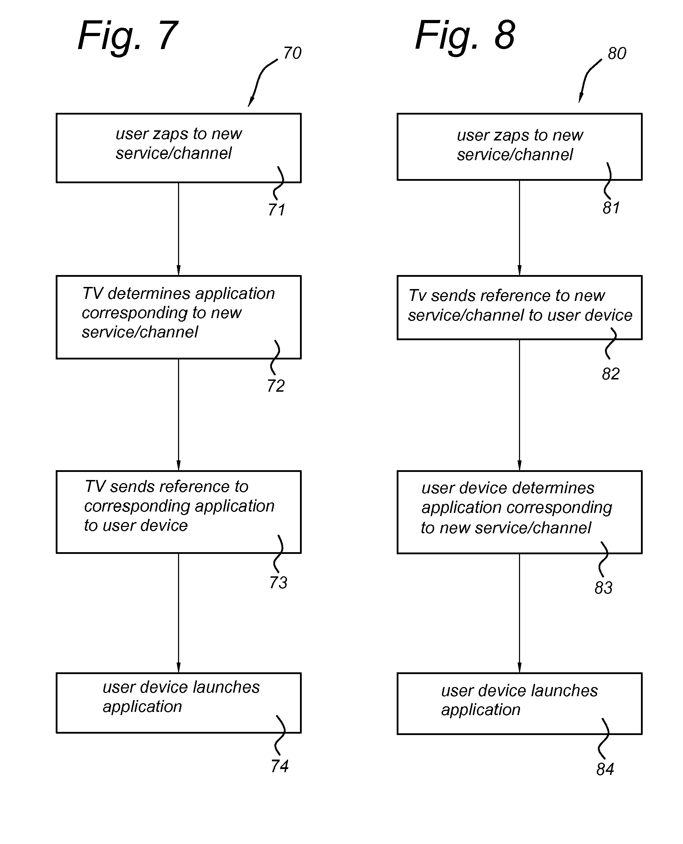

Figure 7 schematically shows a method 70 for launching an application, according to an embodiment of the invention. In action 71, the user of a television 10 "zaps" to a new service or channel. In action 72, the TV determines an application corresponding to the new service or channel. This can be done as outlined in reference to for any of the previous example. The television can also have stored the list of applications that was previously generated, so it can easily determine which application is associated with the service or channel that the user switched to. In action 73, the television 10 sends a reference to the application (for example, the name of the application or any other unique identifier) to the user device 110. In action 74, the user device then automatically launches the corresponding application or asks the user permission to launch the corresponding application. Launching also comprises switching to an already running application, for example to an application running in the background. Actions 73 and 74 can include determining whether the application is installed. If the application is already installed, the launching of the application can proceed. If the application is not already installed, and if it is determined that the user has not before actively denied installation of the application, the user device could prompt the user to query if the application should be installed. That way, only applications are installed for services/channels that the user actually watches.

Figure 8 schematically shows an alternative method 80 for launching an application, according to an embodiment of the invention. Actions 81 and 84 are the same as actions 71 and 74 in figure 7. In this embodiment, the television 10 sends, in action 82, a reference to the new service or channel to the user device 110. The user device then, in action 83, determines which application corresponds to the service or channel that the TV has been switched to.

The embodiments of figure 7 and 8 thus allow a user to quickly, even automatically, access a user device application corresponding to the current television channel or service.

In summary, the invention thus provides a convenient way for a user of a consumer electronics device, such as a television 10, to discover relevant applications to be installed on a further consumer electronics device, such as a user device 110 which can for example be a laptop, tablet computer, or mobile phone. The invention also makes it possible to conveniently install the found applications, and to quickly launch the application when the user switches to the relevant channel or service.

In the foregoing description of the figures, the invention has been described with reference to specific embodiments thereof. It will, however, be evident that various modifications and changes may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Method for providing a list of references to applications, the method comprising
- obtaining (22, 41) information about a platform type of a user device (110);
- obtaining (23, 43) information on available services and/or channels from a television (10);
- finding references to applications for said platform type, each of the applications being associated with at least one of said services and/or channels; and
- providing (24, 44) a list of said references to applications.

2. Method according to claim 1, further comprising
- displaying the list of references to applications on the user device (110).

3. Method according to claim 2, further comprising:
- receiving a selection of listed references to applications from a user;
- installing (26, 45) the selected applications;

4. Method according to any of the previous claims, further comprising
- determining (71, 81) a channel or service that the television (10) is tuned to;
- determining (72, 83) an application corresponding to the channel or service;
- launching (74, 84) the application on the user device (110).

5. Method according to any of the previous claims, wherein information about services is obtained from a Conditional Access Module, CAM, (13) of a television (10).

6. Method according to any of the previous claims, wherein information about a channel is obtained from an Application Identification Table, AIT, associated with said channel.

7. Method according to any of the previous claims, wherein information about a provider is obtained from a SmartTV portal.

8. Television (10) comprising:
- communication means for communicating with a user device (110); and
- a processing unit (14) configured to
- obtain (22) information about a platform type of the user device (110)
- obtain information on services and/or channels (23) available on the television;
- find references to applications for said platform type, each of the applications being associated with at least one of said services and/or channels; and
- provide a list of said references to applications (24).

9. Television (10) according to claim 8, wherein the processing unit (14) is further configured to:
- send (25) the list of references to applications to the user device (110).

10. Television (10) according to claim 8 or 9, further comprising a network interface (15) for connecting to a server (201) via a network (200), wherein the processing unit is configured to find references to applications by sending a request comprising the information about a platform type and information relating to services and/or channels to the server and by receiving a response comprising said references from the server.

11. User device (110) comprising:
- communication means for communicating with a television (10);
- a processing unit (114), configured to:
- obtain (43) information on available services and/or channels from the television (10);
- - find references to applications for a platform type of the user device, each of the applications being associated with at least one of said services and/or channels; and
- provide a list of said references to applications (44).

12. User device (110) according to claim 11, wherein the processing unit (114) is further configured to:
- display the list of references to applications on a display (111) of the user device (110).

13. User device (110) according to claim 11 or 12, wherein the processing unit (114) is configured to:
- receive a selection of applications from the list of applications; and
- installing the selected applications.

14. User device (110) according to claim 13, wherein the processing unit (114) is configured to install the selected applications in a batch process.

15. Television (10) configured to cooperate with a user device (110) according to any of the claims 10-14.
